# FASCICULE DE BREVET EUROPEEN

(11) **EP 3 686 418 B1**
(45) Date de publication et mention de la délivrance du brevet: **01.12.2021**
(21) Numéro de dépôt: 20151099.7
(22) Date de dépôt: 10.01.2020
(51) Int. Cl.: F02K 1/72

(54) **TURBORÉACTEUR DOUBLE FLUX COMPORTANT UNE SÉRIE DE LAMES ROTATIVES POUR OBTURER LA VEINE DU FLUX SECONDAIRE**
DOPPELSTROM-TURBOTRIEBWERK, DAS EINE REIHE VON ROTIERENDEN SCHAUFELBLÄTTERN UMFASST, UM DEN KANAL DES SEKUNDÄRSTROMS ABZUDICHTEN
DUAL-FLOW TURBOJET ENGINE COMPRISING A SERIES OF ROTARY STRIPS FOR BLOCKING THE SECONDARY FLOW STREAM

(30) Priorité: 24.01.2019 FR 1900626
(43) Date de publication de la demande: 29.07.2020
(73) Titulaire: AIRBUS OPERATIONS (S.A.S.), 31060 Toulouse (FR)
(72) Inventeur: GARDES, Pascal, 31060 TOULOUSE Cedex 9 (FR); MENOU, Fabien, 31060 TOULOUSE Cedex 9 (FR); RIDRAY, Frédéric, 31060 TOULOUSE Cedex 9 (FR); ORTEU, Benoit, 31060 TOULOUSE Cedex 9 (FR); TIZAC, Laurent, 31060 TOULOUSE Cedex 9 (FR); CUSSET, Romain, 31060 TOULOUSE Cedex 9 (FR); SEGUIN, Guillaume, 13006 MARSEILLE (FR)
(74) Mandataire: Gicquel, Olivier Yves Gérard

(56) Documents cités:
- DE-A1- 1 937 679
- US-A- 2 933 890
- US-A- 4 030 290

## Description

La présente invention concerne un turboréacteur double flux qui comporte une série de lames qui sont montées rotatives pour obturer la veine du flux secondaire, ainsi qu'un aéronef comportant au moins un tel turboréacteur double flux.

Un aéronef comporte un fuselage de chaque côté duquel est fixée une aile. Sous chaque aile est suspendu au moins un turboréacteur double flux. Chaque turboréacteur double flux est fixé sous l'aile par l'intermédiaire d'un mât qui est fixé entre la structure de l'aile et la structure du turboréacteur double flux.

Le turboréacteur double flux comporte un moteur et une nacelle qui est fixée autour du moteur. Le turboréacteur double flux présente entre la nacelle et le moteur, une veine secondaire dans laquelle circule un flux secondaire.

La nacelle comporte une pluralité de portes d'inversion, chacune étant mobile en rotation sur la structure de la nacelle entre une position escamotée dans laquelle elle est en dehors de la veine secondaire et une position déployée dans laquelle elle se positionne en travers de la veine secondaire afin de dévier le flux secondaire vers une fenêtre qui est dans la paroi de la nacelle et qui est ouverte entre la veine secondaire et l'extérieur de la nacelle.

Ainsi, le flux secondaire est dévié vers l'extérieur et plus précisément vers l'avant du turboréacteur afin de produire une contre-poussée.

Bien que les portes d'inversion donnent entière satisfaction, il est souhaitable de trouver des mécanismes différents, en particulier des mécanismes moins lourds.

On connaît, du document US2933890, des mécanismes de type iris comportant une série de lames rotatives appliqués à des turboréacteurs simple flux pour dévier le flux d'air en sortie du turboréacteur et assurer ainsi une contre-poussée.

Un objet de la présente invention est de proposer un turboréacteur double flux qui comporte une série de lames qui sont montées rotatives pour obturer la veine du flux secondaire.

A cet effet, est proposé un turboréacteur double flux tel que revendiqué à la revendication 1.

Un tel turboréacteur permet une réduction de masse en remplaçant les portes d'inversion et leurs mécanismes d'entraînement par des lames pivotantes plus légères avec un système de manœuvre simplifié.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La figure 1 est une vue de côté d'un aéronef comportant un turboréacteur double flux selon l'invention,
La figure 2 est une vue en perspective du turboréacteur double flux selon l'invention en position avancée et escamotée,
La figure 3 est une vue en perspective du turboréacteur double flux selon l'invention, en position reculée et déployée,
La figure 4 est une représentation schématique d'un turboréacteur double flux selon l'invention vu en coupe par un plan vertical,
La figure 5 est une vue en perspective de derrière d'un système de manœuvre selon l'invention,
La figure 6 est une vue en coupe selon le plan VI de la figure 5,
La figure 7 est une vue en coupe selon la ligne VII-VII de la figure 6, et
La figure 8 est une vue en perspective d'un autre mode de réalisation de l'invention.

Dans la description qui suit, les termes relatifs à une position sont pris en référence au sens d'écoulement de l'air dans un turboréacteur qui s'écoule donc de l'avant vers l'arrière de l'aéronef.

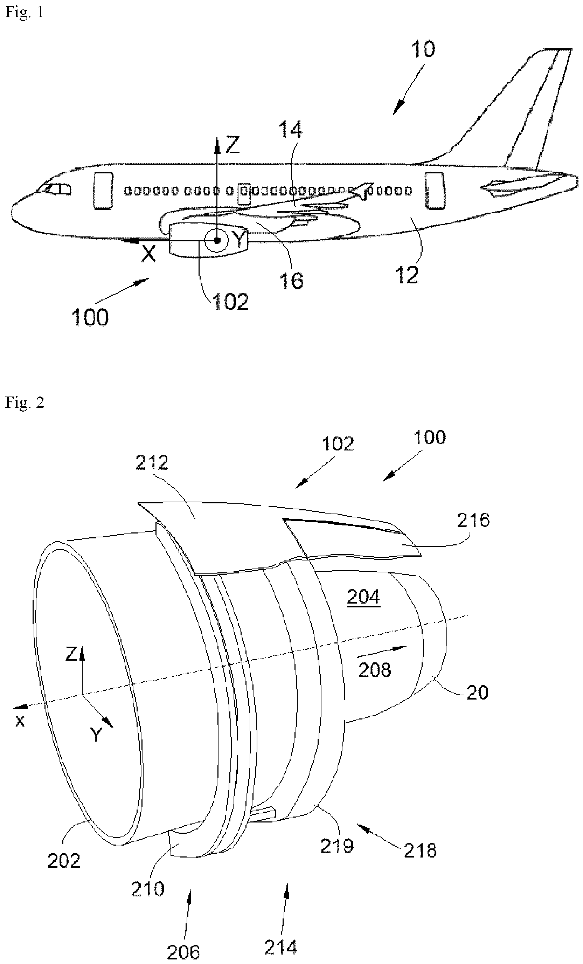

La figure 1 montre un aéronef 10 qui comporte un fuselage 12 de chaque côté duquel est fixée une aile 14 qui porte au moins un turboréacteur double flux 100 selon l'invention. La fixation du turboréacteur double flux 100 sous l'aile 14 s'effectue par l'intermédiaire d'un mât 16.

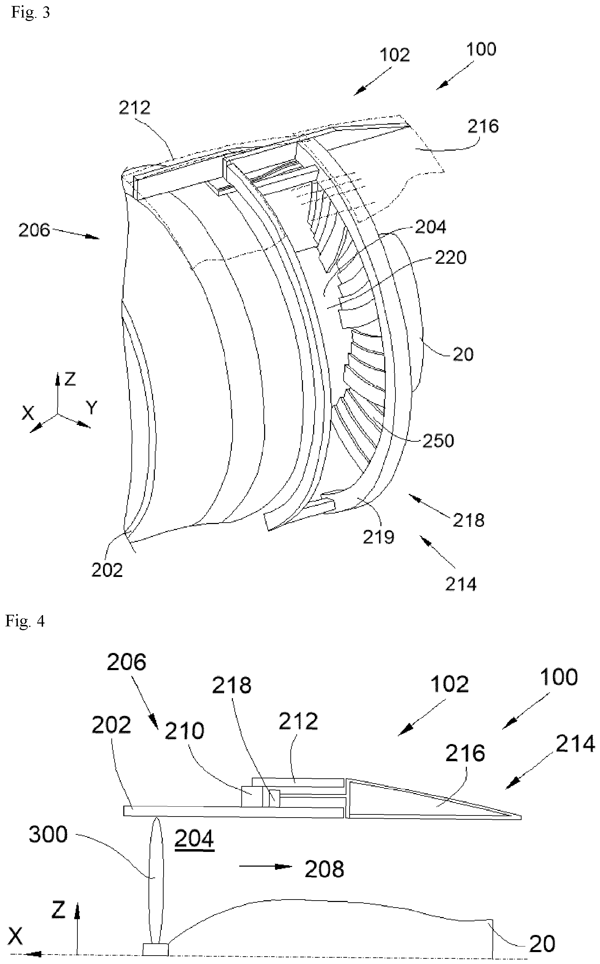

Les figures 2 et 3 montrent le turboréacteur double flux 100 qui présente une nacelle 102 et un moteur 20 qui est logé à l'intérieur de la nacelle 102 et qui comporte un carter de soufflante 202. Le moteur 20 est matérialisé par sa partie arrière d'éjection.

Dans la description qui suit, et par convention, on appelle X l'axe longitudinal du turboréacteur double flux 100 qui est parallèle à l'axe longitudinal de l'aéronef 10 orienté positivement vers l'avant de l'aéronef 10, on appelle Y l'axe transversal qui est horizontal lorsque l'aéronef est au sol, et Z l'axe vertical, ces trois directions X, Y et Z étant orthogonales entre elles.

Les figures 2 et 3 montrent le turboréacteur double flux 100 dans deux positions d'utilisation différentes et la figure 4 montre une représentation schématique en coupe du turboréacteur double flux 100.

Le turboréacteur double flux 100 présente entre la nacelle 102 et le moteur 20, une veine 204 dans laquelle circule un flux secondaire 208 provenant de l'entrée d'air à travers une soufflante 300 et qui s'écoule donc selon le sens d'écoulement qui va de l'avant vers l'arrière.

La nacelle 102 présente une structure fixe 206 qui est montée fixe sur le carter de soufflante 202. La structure fixe 206 est composée en particulier ici d'un cadre avant 210 monté autour du carter de soufflante 202 et de panneaux extérieurs 212 formant une surface aérodynamique qui sont montrés en transparence sur la figure 3 et dont une partie est découpée sur les figures 2 et 3.

La nacelle 102 présente un ensemble mobile 214 qui présente un capot mobile 216 (également en transparence sur la figure 3) dont une partie est découpée sur les figures 2 et 3 et qui forme les parois extérieures de la tuyère.

La nacelle 102 présente également un coulisseau 218. Le coulisseau 218 prend ici la forme d'un cylindre à parois ajourées. Le capot mobile 216 est fixé au et en aval du coulisseau 218 par rapport au sens d'écoulement du flux d'air dans le turboréacteur double flux 100.

Le coulisseau 218 est monté mobile en translation selon une direction de translation globalement parallèle à l'axe longitudinal X sur la structure fixe 206 de la nacelle 102.

Le coulisseau 218 est mobile entre une position avancée (figure 2) et une position reculée (figure 3) et inversement. En position avancée, le coulisseau 218 est positionné le plus en avant possible par rapport au sens d'écoulement de manière à ce que le capot mobile 216 soit rapproché des panneaux extérieurs 212 et du carter de soufflante 202 et forme ainsi une surface aérodynamique. En position reculée, le coulisseau 218 est positionné le plus en arrière possible par rapport au sens d'écoulement de manière à ce que le capot mobile 216 soit éloigné des panneaux extérieurs 212 et du carter de soufflante 202 de manière à définir entre eux une fenêtre 220.

En position avancée, le capot mobile 216 et les panneaux extérieurs 212 se prolongent de manière à définir la surface extérieure de la nacelle 102, et le capot mobile 216 et le carter de soufflante 202 se prolongent de manière à définir la surface extérieure de la veine 204.

En position reculée, le capot mobile 216 et le carter de soufflante 202 ainsi que les panneaux extérieurs 212 sont à distance et définissent entre eux la fenêtre 220 ouverte entre la veine 204 et l'extérieur de la nacelle 102. C'est-à-dire que l'air du flux secondaire 208 traverse la fenêtre 220 pour rejoindre l'extérieur du turboréacteur double flux 100.

La translation du coulisseau 218 est réalisée par tous moyens appropriés, comme par exemple, des systèmes de glissières entre la structure fixe 206 et le coulisseau 218.

La nacelle 102 comporte également un ensemble d'actionneurs (non représentés) assurant le déplacement en translation du coulisseau 218 entre la position avancée et la position reculée et inversement. Chaque actionneur est commandé par une unité de contrôle, par exemple du type processeur, qui commande les déplacements dans un sens ou dans l'autre selon les besoins de l'aéronef 10.

Chaque actionneur peut prendre par exemple la forme d'un vérin à double effet (deux directions de travail) dont le cylindre est fixé à la structure fixe 206 et une tige fixée au coulisseau 218.

Afin d'orienter le flux d'air sortant de la fenêtre 220, des cascades peuvent être fixées sur le coulisseau 218 en regard de la fenêtre 220.

Le carter de soufflante 202 et les panneaux extérieurs 212 délimitent la fenêtre 220 en amont par rapport au sens d'écoulement et le capot mobile 216 délimite la fenêtre 220 en aval par rapport au sens d'écoulement.

La nacelle 102 comporte une pluralité de lames 250, chacune étant montée mobile en rotation sur le coulisseau 218 autour d'un axe de rotation qui est ici globalement parallèle à l'axe longitudinal X. Chaque lame 250 est ainsi mobile entre une position escamotée (figure 2) dans laquelle la lame 250 est en dehors de la veine 204 et une position déployée (figure 3) dans laquelle la lame 250 est en travers de la veine 204 afin de dévier le flux secondaire 208 vers la fenêtre 220.

Chaque lame 250 est montée mobile au niveau d'une première extrémité tandis qu'une deuxième extrémité se rapproche du moteur 20 lorsque la lame 250 est déployée afin d'obturer au mieux la veine 204.

Les lames 250 sont décalées angulairement de proche en proche autour de l'axe longitudinal X.

Le nombre de lames 250 ainsi que la forme de chacune d'elles dépendent des dimensions du turboréacteur double flux 100 ainsi que de la largeur de chaque lame 250 afin qu'en position déployée, les lames 250 obturent la plus grande partie de la veine 204.

Le passage de la position escamotée à la position déployée s'effectue par une rotation de la lame 250 vers l'intérieur du turboréacteur 100.

La position escamotée peut être adoptée lorsque le coulisseau 218 est en position avancée ou en position reculée. La position déployée ne peut être adoptée que lorsque le coulisseau 218 est en position reculée.

Le coulisseau 218 porte également un système de manœuvre 400 qui déplace chaque lame 250 de la position escamotée à la position déployée et inversement et qui est décrit ci-dessous.

Le fonctionnement consiste ainsi, à partir de la position avancée/escamotée, à commander l'activation des actionneurs pour déplacer le coulisseau 218 de la position avancée à la position reculée, au cours de ce déplacement, le système de manœuvre 400 déplace les lames 250 de la position escamotée à la position déployée.

A l'inverse, le fonctionnement consiste ainsi, à partir de la position reculée/déployée, à commander l'activation des actionneurs pour déplacer le coulisseau 218 de la position reculée à la position avancée, au cours de ce déplacement, le système de manœuvre 400 déplace les lames 250 de la position déployée à la position escamotée.

L'utilisation des lames 250 montées rotatives sur le coulisseau 218 permet un allégement de l'ensemble par rapport à l'utilisation de portes d'inversion de l'état de la technique.

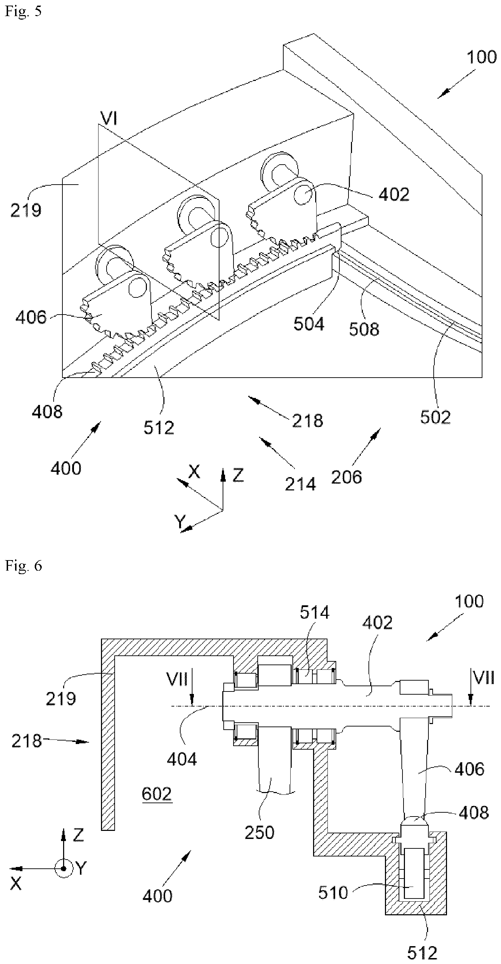

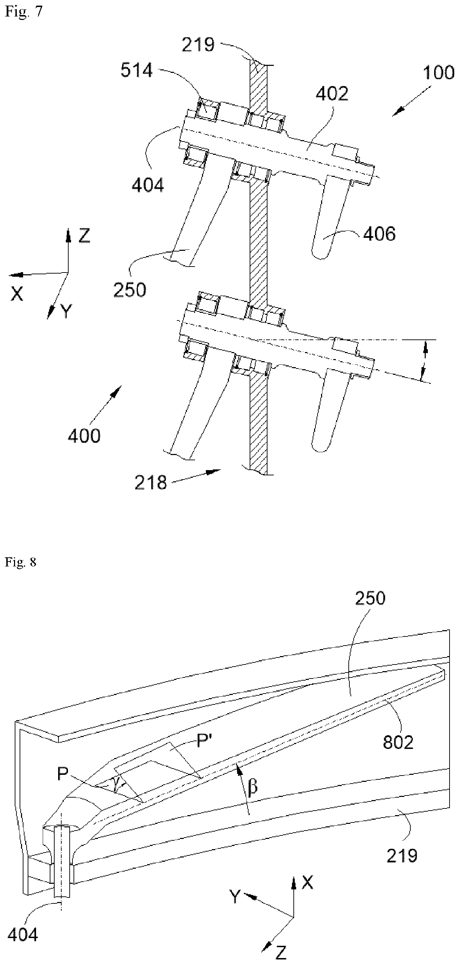

La figure 5 montre le système de manœuvre 400 et les figures 6 et 7 montrent des coupes du système de manœuvre 400.

Pour chaque lame 250, le système de manœuvre 400 comporte un arbre 402 qui est monté mobile en rotation sur le coulisseau 218 autour d'un axe de rotation 404, et sur lequel la lame 250 est fixée.

Pour chaque lame 250, le système de manœuvre 400 comporte également un secteur denté 406 fixé sur l'arbre 402 et coaxial avec l'axe de rotation 404.

Le système de manœuvre 400 comporte également un arc denté 408 qui est coaxial avec l'axe longitudinal X. L'arc denté 408 est monté mobile en rotation sur l'ensemble mobile 214 et plus particulièrement sur le coulisseau 218 autour de l'axe longitudinal X.

Les dents de l'arc denté 408 engrènent avec les dents de chaque secteur denté 406. Ainsi, un déplacement en rotation de l'arc denté 408 entraîne la rotation de chaque secteur denté 406 et donc de la lame 250 associée.

Chaque lame 250 s'étend dans un plan globalement perpendiculaire à l'axe longitudinal X.

Chaque lame 250 est montée mobile sur le pourtour du coulisseau 218. Lorsque les lames 250 sont en position escamotée, elles se superposent selon l'axe longitudinal X.

La structure fixe 206 comporte une rainure 502 qui est disposée ici à 12 heures.

L'arc denté 408 est équipé d'une came 504 qui loge dans la rainure 502. Dans le mode de réalisation de l'invention présenté ici, la came 504 est fixée à une extrémité de l'arc denté 408, mais elle pourrait être à un autre endroit de l'arc denté 408.

Lors du déplacement de l'ensemble mobile 214 vers la position reculée, la came 504 suit la rainure 502 et une déviation de la rainure 502 entraîne une rotation de la came 504 et donc de l'arc denté 408 autour de son axe de rotation et par entraînement, la rotation de chaque secteur denté 406 et donc de chaque lame 250 vers sa position déployée et inversement.

La rainure 502 présente une forme qui est adaptée pour permettre la rotation de la lame 250 de la position escamotée à la position déployée lorsque le coulisseau 218 passe de la position avancée à la position reculée. Et réciproquement, la rainure 502 présente une forme qui est adaptée pour permettre la rotation de la lame 250 de la position déployée à la position escamotée lorsque le coulisseau 218 passe de la position reculée à la position avancée.

La rainure 502 présente une extrémité proximale où se positionne la came 504 lorsque le coulisseau 218 est en position avancée et une extrémité distale où se positionne la came 504 lorsque le coulisseau 218 est en position reculée.

Pour éviter le déploiement de la lame 250 dès le début de la translation du coulisseau 218 vers sa position reculée, la rainure 502 présente au niveau de son extrémité proximale, une partie rectiligne 508 parallèle à la direction de translation.

Le système de manœuvre 400 comporte donc également la rainure 502 et la came 504.

Le déplacement de toutes les lames 250 est alors relativement simple à mettre en œuvre et il ne nécessite pas d'actionneurs autres que ceux nécessaires au déplacement du coulisseau 218.

Pour assurer que les lames 250 n'entrent pas en contact les unes avec les autres lors des déplacements, plusieurs solutions sont possibles.

Par exemple, selon un mode de réalisation particulier représenté à la figure 7, l'axe de rotation 404 de chaque lame 250 présente un angle de déport α par rapport à l'axe longitudinal X. L'angle de déport α dépend de l'encombrement autour de chaque lame 250 et est par exemple de l'ordre de 5° à 20°.

L'angle de déport α doit donc être suffisamment important pour éviter les contacts entre les lames 250 lors des déplacements et être suffisamment réduit pour éviter que les lames 250 s'écartent les unes des autres en position déployée, ce qui permettrait un passage de l'air à travers les lames 250. Ainsi, en position déployée, les lames 250 doivent être en contact les unes avec les autres et préférentiellement les bords de deux lames 250 voisines se chevauchent.

Le coulisseau 218 comporte un profilé en U 219 coaxial avec l'axe longitudinal X et ouvert vers l'axe longitudinal X. Le profilé en U 219 forme une cage 602 où les lames 250 sont montées mobiles en rotation sur le profilé en U 219.

En position escamotée, chaque lame 250 est logée dans le profilé en U 219 et en position déployée, la deuxième extrémité sort du profilé en U 219 pour se rapprocher du moteur 20.

Dans le mode de réalisation de l'invention présenté sur la figure 6, l'arc denté 408 et le coulisseau 218 forment une liaison pivot par coopération entre des nervures de l'arc denté 408 et des rainures du coulisseau 218. D'autres modes de réalisation sont évidemment possibles.

Pour faciliter le déplacement de l'arc denté 408, le système de manœuvre 400 comporte une pluralité de galets 510 disposés sous l'arc denté 408, où chacun est monté mobile en rotation sur le coulisseau 218 autour d'un axe globalement parallèle à l'axe longitudinal X.

Dans le mode de réalisation de l'invention présenté à la figure 6, les galets 510 sont montés dans une goulotte 512 du coulisseau 218.

La rotation de chaque arbre 402 sur le coulisseau 218 est assurée ici par une série de paliers 514.

L'invention a été plus particulièrement décrite dans le cas d'un arc denté 408 par côté du turboréacteur double flux 100, mais pour réduire les dimensions de l'arc denté 408, il est possible de prévoir deux arcs dentés 408 par côté, où les deux arcs dentés 408 se déplacent dans des sens de rotation opposés. Certaines lames 250 vont alors engrener avec l'un des arcs dentés 408 et les autres lames 250 vont alors engrener avec l'autre arc denté 408.

Pour vérifier le déplacement de l'arc denté 408, un capteur peut être mis en place.

L'invention a été plus particulièrement décrite dans le cas d'une nacelle sous une aile mais elle peut s'appliquer à une nacelle située à l'arrière du fuselage.

Selon un autre mode de réalisation, les lames peuvent être décalées les unes par rapport aux autres, parallèlement à l'axe longitudinal X.

Selon un autre mode de réalisation particulier représenté sur la figure 8 qui est une vue en coupe, l'axe de rotation 404 de chaque lame 250 est parallèle à l'axe longitudinal X et chaque lame 250 présente une forme particulière et adaptée assurant que les lames 250 n'entrent pas en contact les unes avec les autres lors des déplacements.

La lame 250 présente une fibre moyenne 802 qui est globalement la ligne centrale de la lame 250 et cette fibre moyenne 802 présente un angle de battement β par rapport à un plan de base perpendiculaire à l'axe 404 de la lame 250 et matérialisé ici par une paroi du profilé en U 219, où 0°<β<15°.

La lame 250 présente un plan moyen P' qui passe par la fibre moyenne 802 et qui est globalement le plan milieu de la lame 250, ce plan moyen P' présente un angle de pas γ par rapport à un autre plan de base P perpendiculaire à l'axe 404 de la lame 250 et passant par la fibre moyenne 802, où 0°<γ<20°.

## Revendications

1. Turboréacteur double flux (100) présentant un axe longitudinal (X) et comportant un moteur (20) et une nacelle (102) entourant le moteur (20) qui comporte un carter de soufflante (202), où une veine (204) d'un flux secondaire (208) est délimitée entre la nacelle (102) et le moteur (20) et dans laquelle un flux d'air circule selon un sens d'écoulement, ladite nacelle (102) comportant :
- une structure fixe (206) fixée au carter de soufflante (202),
- un ensemble mobile (214) présentant un capot mobile (216) et un coulisseau (218), le capot mobile (216) étant fixé au coulisseau (218), le coulisseau (218) étant mobile en translation sur la structure fixe (206) selon une direction de translation entre une position avancée dans laquelle le coulisseau (218) est positionné de manière à ce que le capot mobile (216) soit rapproché du carter de soufflante (202) et une position reculée dans laquelle le coulisseau (218) est positionné de manière à ce que le capot mobile (216) soit éloigné du carter de soufflante (202) pour définir entre eux une fenêtre (220) ouverte entre la veine (204) et l'extérieur de la nacelle (102),
- une pluralité de lames (250), chacune comportant une première extrémité montée mobile en rotation sur le coulisseau (218) autour d'un axe de rotation et où les lames (250) sont décalées angulairement de proche en proche autour de l'axe longitudinal (X), où chaque lame (250) est mobile entre une position escamotée dans laquelle la lame (250) est en dehors de la veine (204) et une position déployée dans laquelle la lame (250) est en travers de la veine (204),
- un ensemble d'actionneurs assurant le déplacement du coulisseau (218) entre la position avancée et la position reculée, et inversement, et
- un système de manœuvre (400) destiné à déplacer chaque lame (250) de la position escamotée à la position déployée et inversement, où le système de manœuvre (400) comporte :
- pour chaque lame (250), un arbre (402) monté mobile en rotation sur le coulisseau (218) autour d'un axe de rotation (404), et sur lequel la lame (250) est fixée,
- pour chaque lame (250), un secteur denté (406) fixé sur l'arbre (402) et coaxial avec l'axe de rotation (404),
- un arc denté (408) coaxial avec l'axe longitudinal (X), monté mobile en rotation sur le coulisseau (218) autour de l'axe longitudinal (X), où les dents de l'arc denté (408) engrènent avec les dents de chaque secteur denté (406),
- une came (504) solidaire de l'arc denté (408), et
- une rainure (502) solidaire de la structure fixe (206) dans laquelle loge la came (504) et où lors du déplacement de l'ensemble mobile (214), la came (504) suit la rainure (502) et déplace en rotation l'arc denté (408).

2. Turboréacteur double flux (100) selon la revendication 1, **caractérisé en ce que** le capot mobile (216) comporte un profilé en U (219) coaxial avec l'axe longitudinal (X) et ouvert vers l'axe longitudinal (X), **en ce que** les lames (250) sont montées mobiles en rotation sur le profilé en U (219), **en ce qu'**en position escamotée, chaque lame (250) est logée dans le profilé en U (219) et **en ce qu'**en position déployée, une deuxième extrémité de chaque lame (250) sort du profilé en U (219).

3. Turboréacteur double flux (100) selon l'une des revendications 1 ou 2, **caractérisé en ce que** la rainure (502) présente une extrémité proximale où se positionne la came (504) lorsque le coulisseau (218) est en position avancée et, **en ce que** la rainure (502) présente au niveau de son extrémité proximale, une partie rectiligne (508) parallèle à la direction de translation.

4. Turboréacteur double flux (100) selon l'une des revendications précédentes, **caractérisé en ce que** l'axe de rotation (404) de chaque lame (250) présente un angle de déport (a) par rapport à l'axe longitudinal (X), où l'angle de déport doit être suffisamment important pour éviter les contacts entre les lames (250) lors des déplacements, et suffisamment réduit pour éviter que les lames (250) s'écartent les unes des autres en position déployée.

5. Turboréacteur double flux (100) selon l'une des revendications précédentes, **caractérisé en ce que** le système de manœuvre (400) comporte une pluralité de galets (510) disposés sous l'arc denté (408), où chacun est monté mobile en rotation sur le coulisseau (218) autour d'un axe globalement parallèle à l'axe longitudinal (X).

6. Turboréacteur double flux (100) selon l'une des revendications précédentes, **caractérisé en ce qu'**il y a deux arcs dentés (408) par côté du turboréacteur double flux (100), et **en ce que** les deux arcs dentés (408) se déplacent dans des sens de rotation opposés.

7. Aéronef (10) comportant au moins un turboréacteur double flux (100) selon l'une des revendications précédentes.

## Patentansprüche

1. Zweistrom-Turbinenstrahltriebwerk (100) mit einer Längsachse (X), umfassend einen Antrieb (20) und eine den Antrieb (20) umgebende Gondel (102), die ein Gebläsegehäuse (202) aufweist, wobei zwischen der Gondel (102) und dem Antrieb (20) eine Bahn (204) eines Sekundärstroms (208) begrenzt ist und wobei ein Luftstrom in einer Strömungsrichtung zirkuliert, wobei die Gondel (102) Folgendes aufweist:
- eine am Gebläsegehäuse (202) befestigte feste Struktur (206),
- eine bewegliche Anordnung (214), die eine bewegliche Abdeckung (216) und einen Schieber (218) aufweist, wobei die bewegliche Abdeckung (216) am Schieber (218) befestigt ist, wobei der Schieber (218) auf der festen Struktur (206) in einer Translationsrichtung zwischen einer vorgeschobenen Position, in der der Schieber (218) so positioniert ist, dass die bewegliche Abdeckung (216) dem Gebläsegehäuse (202) angenähert ist, und einer zurückgezogenen Position, in der der Schieber (218) so positioniert ist, dass die bewegliche Abdeckung (216) vom Gebläsegehäuse (202) entfernt ist, um dazwischen ein offenes Fenster (220) zwischen der Bahn (204) und dem Äußeren der Gondel (102) zu definieren, translatorisch bewegbar ist,
- mehrere Blätter (250), die jeweils ein erstes Ende aufweisen, das um eine Drehachse drehbar am Schieber (218) montiert ist, wobei die Blätter (250) um die Längsachse (X) herum nach und nach winkelmäßig versetzt sind, wobei jedes Blatt (250) zwischen einer eingefahrenen Position, in der sich das Blatt (250) außerhalb der Bahn (204) befindet, und einer ausgefahrenen Position, in der sich das Blatt (250) quer zur Bahn (204) befindet, bewegbar ist,
- einen Satz von Aktoren, die die Bewegung des Schiebers (218) zwischen der vorgeschobenen Position und der zurückgezogenen Position und umgekehrt gewährleisten, und
- ein Betätigungssystem (400), das dazu bestimmt ist, jedes Blatt (250) aus der eingefahrenen Position in die ausgefahrene Position und umgekehrt zu bewegen, wobei das Betätigungssystem (400) Folgendes aufweist:
- für jedes Blatt (250) eine Welle (402), die um eine Drehachse (404) drehbar am Schieber (218) montiert ist und an der das Blatt (250) befestigt ist,
- für jedes Blatt (250) einen Zahnsektor (406), der an der Welle (402) befestigt und koaxial zur Drehachse (404) angeordnet ist,
- einen zur Längsachse (X) koaxialen Zahnbogen (408), der um die Längsachse (X) drehbar am Schieber (218) montiert ist, wobei die Zähne des Zahnbogens (408) mit den Zähnen jedes Zahnsektors (406) kämmen,
- einen fest mit dem Zahnbogen (408) verbundenen Nocken (504) und
- eine fest mit der festen Struktur (206) verbundene Nut (502), in der der Nocken (504) untergebracht ist, wobei der Nocken (504) bei der Bewegung der beweglichen Anordnung (214) der Nut (502) folgt und den Zahnbogen (408) in Drehung versetzt.

2. Zweistrom-Turbinenstrahltriebwerk (100) nach Anspruch 1, **dadurch gekennzeichnet, dass** die bewegliche Abdeckung (216) ein U-förmiges Profil (219) aufweist, das koaxial zur Längsachse (X) verläuft und zur Längsachse (X) hin offen ist, dass die Blätter (250) drehbar am U-förmigen Profil (219) montiert sind, dass in der eingefahrenen Position jedes Blatt (250) im U-förmigen Profil (219) untergebracht ist und dass in der ausgefahrenen Position ein zweites Ende jedes Blatts (250) aus dem U-förmigen Profil (219) herausragt.

3. Zweistrom-Turbinenstrahltriebwerk (100) nach einem der Ansprüche 1 oder 2, **dadurch gekennzeichnet, dass** die Nut (502) ein proximales Ende aufweist, an dem der Nocken (504) positioniert ist, wenn sich der Schieber (218) in der vorgeschobenen Position befindet, und dass die Nut (502) an ihrem proximalen Ende einen zur Translationsrichtung parallelen geradlinigen Abschnitt (508) aufweist.

4. Zweistrom-Turbinenstrahltriebwerk (100) nach einem der vorangehenden Ansprüche, **dadurch gekennzeichnet, dass** die Drehachse (404) jedes Blatts (250) einen Versatzwinkel (α) relativ zur Längsachse (X) aufweist, wobei der Versatzwinkel groß genug sein muss, um einen Kontakt zwischen den Blättern (250) während der Bewegungen zu verhindern, und klein genug, um zu verhindern, dass sich die Blätter (250) in der ausgefahrenen Position voneinander entfernen.

5. Zweistrom-Turbinenstrahltriebwerk (100) nach einem der vorangehenden Ansprüche, **dadurch gekennzeichnet, dass** das Betätigungssystem (400) mehrere unter dem Zahnbogen (408) angeordnete Rollen (510) aufweist, wobei jede um eine zur Längsachse (X) im Allgemeinen parallele Achse drehbar am Schieber (218) montiert ist.

6. Zweistrom-Turbinenstrahltriebwerk (100) nach einem der vorangehenden Ansprüche, **dadurch gekennzeichnet, dass** pro Seite des Zweistrom-Turbinenstrahltriebwerks (100) zwei Zahnbögen (408) vorhanden sind und dass sich die beiden Zahnbögen (408) in entgegengesetzte Drehrichtungen bewegen.

7. Luftfahrzeug (10), umfassend zumindest ein Zweistrom-Turbinenstrahltriebwerk (100) nach einem der vorangehenden Ansprüche.

## Claims

1. Turbofan (100) having a longitudinal axis (X) and comprising a motor (20) and a nacelle (102), surrounding the motor (20), which comprises a fan casing (202), in which a duct (204) for a bypass flow (208) is delimited between the nacelle (102) and the motor (20) and in which a flow of air flows in a flow direction, said nacelle (102) comprising:
- a fixed structure (206) fixed to the fan casing (202),
- a mobile assembly (214) having a mobile cowl (216) and a slider (218), the mobile cowl (216) being fixed to the slider (218), the slider (218) being mobile in translation, on the fixed structure (206), in a direction of translation between an advanced position in which the slider (218) is positioned such that the mobile cowl (216) is moved close to the fan casing (202) and a retracted position in which the slider (218) is positioned such that the mobile cowl (216) is moved away from the fan casing (202) so as to define, between them, an open window (220) between the duct (204) and the exterior of the nacelle (102),
- a plurality of blades (250), each one comprising a first end mounted so as to be mobile in rotation on the slider (218) about an axis of rotation, and where the blades (250) are angularly offset from one to the next about the longitudinal axis (X), wherein each blade (250) is mobile between a stowed position in which the blade (250) is outside the duct (204) and a deployed position in which the blade (250) is across the duct (204),
- an assembly of actuators causing the slider (218) to move between the advanced position and the retracted position, and vice versa, and
- a manoeuvring system (400) intended to move each blade (250) from the stowed position to the deployed position and vice versa, where the manoeuvring system (400) comprises:
- for each blade (250), a shaft (402) mounted so as to be mobile in rotation on the slider (218) about an axis of rotation (404), and on which the blade (250) is fixed,
- for each blade (250), a toothed sector (406) that is fixed to the shaft (402) and is coaxial with the axis of rotation (404),
- a toothed arc (408) that is coaxial with the longitudinal axis (X), mounted so as to be mobile in rotation on the slider (218) about the longitudinal axis (X), where the teeth of the toothed arc (408) mesh with the teeth of each toothed sector (406),
- a cam (504) as one with the toothed arc (408), and
- a groove (502), as one with the fixed structure (206), which receives the cam (504) and where, when the mobile assembly (214) moves, the cam (504) follows the groove (502) and rotates the toothed arc (408).

2. Turbofan (100) according to Claim 1, **characterized in that** the mobile cowl (216) comprises a U-shaped profile (219) coaxial with the longitudinal axis (X) and open towards the longitudinal axis (X), **in that** the blades (250) are mounted mobile in rotation on the U-shaped profile (219), **in that**, in the stowed position, each blade (250) is received in the U-shaped profile (219) and **in that**, in the deployed position, a second end of each blade (250) leaves the U-shaped profile (219).

3. Turbofan (100) according to either of Claims 1 and 2, **characterized in that** the groove (502) has a proximal end where the cam (504) is located when the slider (218) is in the advanced position, and **in that** the groove (502) has, at its proximal end, a straight portion (508) parallel to the direction of translation.

4. Turbofan (100) according to one of the preceding claims, **characterized in that** the axis of rotation (404) of each blade (250) has an offset angle (α) relative to the longitudinal axis (X), where the offset angle must be large enough to avoid contact between the blades (250) during movements, and small enough to avoid the blades (250) moving apart from one another in the deployed position.

5. Turbofan (100) according to one of the preceding claims, **characterized in that** the manoeuvring system (400) comprises a plurality of rollers (510) arranged below the toothed arc (408), where each one is mounted so as to be mobile in rotation on the slider (218) about an axis that is generally parallel to the longitudinal axis (X).

6. Turbofan (100) according to one of the preceding claims, **characterized in that** there are two toothed arcs (408) on each side of the turbofan (100), and **in that** the two toothed arcs (408) move in opposite directions of rotation.

7. Aircraft (10) comprising at least one turbofan (100) according to one of the preceding claims.
